# FASCICULE DE BREVET EUROPEEN

(11) **EP 2 493 751 B1**
(45) Date de publication et mention de la délivrance du brevet: **13.11.2013**
(21) Numéro de dépôt: 10771116.0
(22) Date de dépôt: 28.10.2010
(51) Int. Cl.: B62K 3/00, B62H 1/00, B62K 17/00

(54) **VEHICULE FORMANT GYROPODE A MODULE PHOTOVOLTAÏQUE INTEGRE**
SELBSTAUSGLEICHENDES FAHRZEUG MIT INTEGRIERTEM FOTOVOLTAISCHEM MODUL
BALANCING VEHICLE WITH INTEGRATED PHOTOVOLTAIC MODULE

(30) Priorité: 30.10.2009 FR 0957695
(43) Date de publication de la demande: 05.09.2012
(73) Titulaire: Commissariat à l'Énergie Atomique et aux Énergies Alternatives, 75015 Paris (FR)
(72) Inventeur: HA, Duy Long, F-38320 Eybens (FR); WISS, Olivier, F-69005 Lyon (FR)
(74) Mandataire: Ilgart, Jean-Christophe
(86) Numéro de dépôt international: PCT/EP2010/066321
(87) Numéro de publication internationale: WO 2011/051372

(56) Documents cités:
- DE-U1-202007 004 010
- US-A1- 2008 271 938

## Description

### DOMAINE TECHNIQUE

L'invention concerne un véhicule de type gyropode, c'est-à-dire selon la définition consacrée un véhicule à motorisation électrique monoplace, comprenant une plateforme munie de deux roues sur laquelle l'utilisateur se tient debout, d'un système de stabilisation gyroscopique et d'un manche de maintien et de conduite.

L'invention a trait plus particulièrement à l'intégration dans le gyropode d'un module photovoltaïque permettant de recharger de manière optimale sa batterie à la fois lors de ses déplacements et à l'arrêt.

### ART ANTÉRIEUR

Les véhicules électriques de type gyropode sont des transporteurs de personnes dotés de moteurs électriques et d'une technologie gyroscopique qui leur permettent de tenir en équilibre sur les deux roues parallèles sans que l'utilisateur n'ait à compenser l'instabilité provoquée par le porte à faux du centre de gravité. Ainsi, l'utilisateur est debout et n'a pas besoin de poser le pied par terre ni pour trouver son équilibre ni pour avancer.

En d'autres termes, un gyropode constitue le premier moyen de transport à deux roues qui a une stabilisation dynamique, assurée par un système d'asservissement des roues grâce à des capteurs d'inclinaison (appelés gyroscopes). Ce type de véhicule permet, tout en occupant la même place qu'un piéton, de se déplacer plus rapidement, silencieusement et sans émission polluante sur un espace piéton.

Un gyropode se positionne commercialement sur un marché où l'on trouve déjà la trottinette comme la bicyclette (dans leurs versions électriques) mais, y ajoute des fonctionnalités uniques pour un moyen de transport à deux roues:
- Marche avant et marche arrière,
- Rotation sur place (rayon de braquage nul),
- Garde l'équilibre sur place.

La société Segway est le leader mondial du transport personnel électrique et a déjà commercialisé un nombre important de gyropodes sous le nom commercial de "Segway TP" ou "Segway HT".

Tous les véhicules électriques de type gyropode déjà existants, tels que les Segway TP ou HT, comportent une batterie qui est chargée par l'intermédiaire d'un ensemble de câble et prise au réseau de distribution électrique.

Même si le gyropode s'avère être de faible consommation électrique par rapport aux voitures électriques, la solution de charge des batteries des gyropodes existants n'est pas entièrement satisfaisante d'un point de vue économique et écologique. En outre, le gyropode est très dépendant de l'implantation du réseau de distribution électrique. Or, de par l'utilisation visée, le gyropode est prévu pour aller dans des sites non urbains (golf, champagne, montagne...) qui par définition n'ont pas ce prise électrique du réseau de distribution.

Il est par ailleurs connu des véhicules électriques autres que le gyropode, telles que des voitures, avec panneaux photovoltaïques intégrés qui permettent la charge de la batterie ou le fonctionnement d'autres accessoires présents sur le véhicule. Ces panneaux photovoltaïques sont en général au nombre d'au moins deux et sont intégrés à ou constituent au moins une portion de la carrosserie du véhicule. Aussi, à des fins économique et écologique, réaliser une solution de charge de batterie d'un gyropode en y intégrant un module photovoltaïque apparaît envisageable.

Cela étant, contrairement aux véhicules électriques autres que le gyropode, et comme mentionné précédemment, un gyropode a des fonctionnalités qui lui sont propres :
- la stabilité gyroscopique,
- la possibilité de réaliser à la fois une marche avant et une marche arrière,
- la possibilité d'effectuer une rotation sur place (rayon de braquage nul).

Le document DE-U202007004010 divulgue un véhicule gyropode muni d'une béquille.

Le document US2008/0271938 divulgue un véhicule gyropode muni d'un module photovoltaique.

Le but de l' invention est alors de proposer une nouvelle solution de charge de batterie d'un gyropode par l'intégration d'un module photovoltaïque, qui soit adaptable sur les gyropodes déjà existants et qui ne nuise pas aux fonctionnalités propres des gyropodes.

### EXPOSÉ DE L'INVENTION

Pour ce faire, l'invention a pour objet un véhicule formant gyropode comprenant un manche de maintien et de conduite par un utilisateur, au moins un moteur électrique pour mettre en rotation les roues du gyropode, une batterie permettant d'alimenter le(s) moteur(s) électrique caractérisé en ce qu'il comprend un module photovoltaïque pour charger électriquement la batterie ou pour alimenter partiellement électriquement le moteur électrique à partir de l'énergie solaire, le module photovoltaïque comprenant deux parties dont une est fixe et s'étend le long du manche de maintien et de conduite et l'autre escamotable entre une position extrême escamotée dans laquelle elle permet le déplacement du gyropode et une position extrême déployée dans laquelle elle sert de béquille de maintien du gyropode à l'arrêt selon au moins une inclinaison déterminée permettant d'augmenter le rendement de l'ensemble du module photovoltaïque par rapport à la position du soleil.

Ainsi, selon l'invention, on réalise une intégration d'un module photovoltaïque dans un gyropode qui permet de maximiser la surface photovoltaïque sans sacrifier les fonctions normales du gyropode. On peut ainsi mettre à profit la fonction de rotation sur place du gyropode pour réaliser une poursuite (terme « tracking » en anglais) du soleil optimale. On peut en outre parfaitement intégrer le module photovoltaïque à un gyropode déjà existant.

On précise ici que dans le cadre de l'invention, un module photovoltaïque est à comprendre comme étant un générateur électrique de courant continu comprenant au moins un ensemble de cellules photovoltaïques reliées entre elles électriquement. Dans le cadre de l'invention, seule la partie escamotable du module photovoltaïque nécessite d'être rigide afin de constituer une béquille de maintien à l'arrêt du gyropode en position inclinée.

Selon un premier mode de réalisation, la partie escamotable l'est par coulissement depuis la position extrême escamotée dans laquelle elle s'étend sensiblement parallèlement à la partie fixe du module photovoltaïque.

Avantageusement, la partie coulissante du module photovoltaïque peut être en outre pivotante dans sa position extrême déployée afin de modifier l'inclinaison du gyropode.

Selon un deuxième mode de réalisation, la partie escamotable l'est par pivotement depuis la position extrême escamotée dans laquelle elle s'étend sensiblement parallèlement et en dessous de la plateforme du gyropode.

De préférence, le gyropode comprend des moyens de motorisation électrique pour escamoter la partie escamotable du module photovoltaïque depuis sa position extrême escamotée jusqu'à sa position extrême déployée. Ces moyens de motorisation électrique consistent avantageusement en un servomoteur.

Pour les dimensions et la consommation électrique actuellement existantes des gyropodes, la surface totale du module photovoltaïque peut être comprise entre 0.5 et 1.5 m².

L'invention qui vient d'être décrite permet de maximiser la surface active du module photovoltaïque intégré mais sans dégrader les fonctions d'origine du gyropode.

### BRÈVE DESCRIPTION DES DESSINS

D'autres avantages et caractéristiques ressortiront mieux à la lecture de la description détaillée de l'invention faite en référence aux figures suivantes parmi lesquelles:
- les figures 1A et 1B sont des vues schématiques en perspective d'un gyroscope selon l'invention respectivement en configuration de déplacement et à l'arrêt,
- les figures 2A et 2B sont des vues schématiques de côté un gyroscope respectivement selon un premier mode et un deuxième de l'invention,
- la figure 3 est une vue schématique de face d'un gyroscope selon l'invention en configuration à l'arrêt.

### EXPOSÉ DÉTAILLÉ DE MODES DE RÉALISATION PARTICULIERS

Tel qu'il existe actuellement, le gyropode 1 est un véhicule à motorisation électrique monoplace, comprenant une plateforme 10 munie de deux roues 11 sur laquelle l'utilisateur se tient debout, d'un système de stabilisation gyroscopique (non représenté) et d'un manche de maintien et de conduite 12. Un tel gyropode est largement commercialisé sous la dénomination commerciale Segway™.

Le gyroscope selon l'invention 1 comprend en outre un module photovoltaïque 2 intégrépour charger électriquement la batterie ou pour alimenter électriquement le moteur électrique.

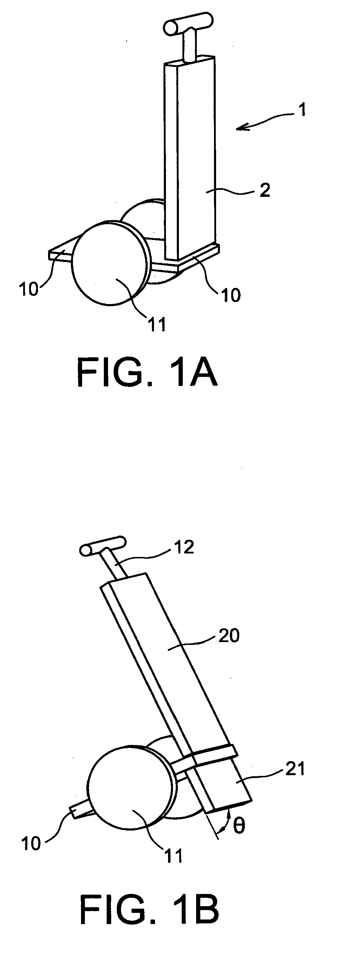

Lorsqu'il est en configuration de déplacement (figure 1A), seule une partie 20 du module photovoltaïque 2 permet de charger la batterie selon les conditions d'ensoleillement. Cette partie 20 est donc fixe et s'étend le long du manche de maintien et de conduite 12. Dans cette configuration de déplacement, une autre partie 21 de surface moins importante que la partie fixe 20 est escamotée. Toutes les fonctions normales du gyropode sont conservées, la stabilité gyroscopique devant être prévue pour compenser le poids du module 2 sur l'avant du gyropode. En d'autres termes, une régulation permanente est prévue pour équilibrer le gyropode 1 avec son module photovoltaïque 2.

Lorsqu'il est en configuration à l'arrêt, l'autre partie 21 partie est déployée de l'intérieur du vers l'extérieur, jusqu'à une position extrême déployée (figure 1B) dans laquelle elle sert de béquille de maintien du gyropode à l'arrêt selon au moins une inclinaison déterminée permettant d'obtenir le meilleur rendement de l'ensemble du module photovoltaïque par rapport à la position du soleil. Tel que représenté en figure 1B, le gyropode 1 est incliné d'une valeur θ de l'ordre de 60° par rapport à l'horizontale grâce à la deuxième partie 21 du module 2.

Pour le déploiement de la deuxième partie 21, il peut être prévu un actionneur motorisé tel qu'un servo-moteur. Alternativement, plus simplement, l'utilisateur lui-même peut pousser manuellement vers le bas la deuxième partie 21 pour atteindre la position extrême et ainsi incliner le gyropode et vice-versa pour le configurer en mode de déplacement.

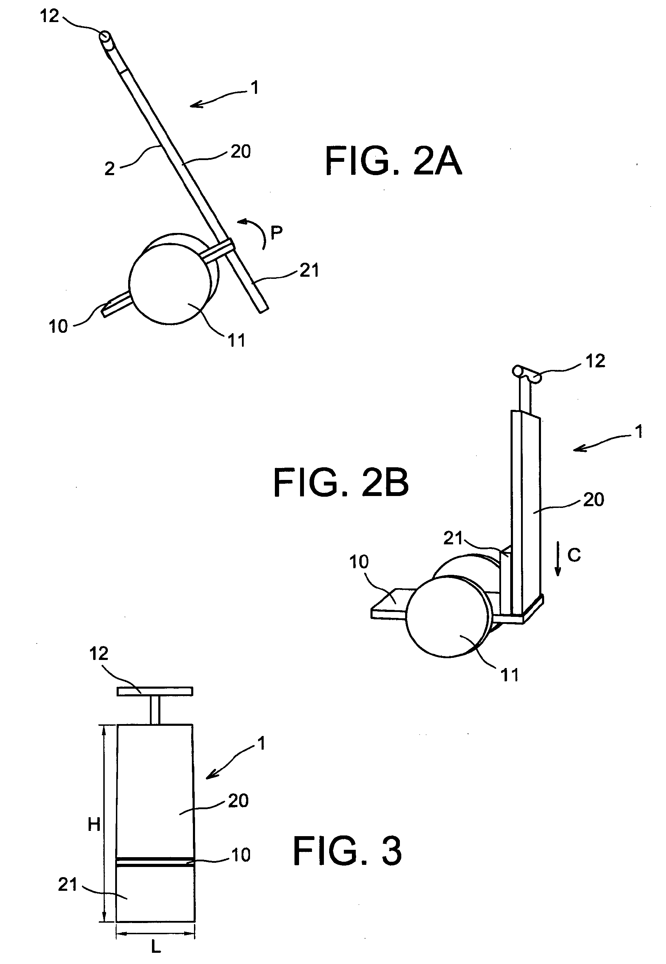

Deux modes de déploiement de la deuxième partie 21 peuvent être envisagés :
- selon un mouvement de pivotement tel que symbolisé par la flèche P en figure 2A, la deuxième partie 21 du module 20 s'étendant en dessous de la plateforme 10 du gyropode 1 en position escamotée,
- selon un mouvement de coulissement tel que symbolisé par la flèche C en figure 2B, la deuxième partie 21 du module 20 s'étendant le long de la première partie 21 en position escamotée (figure 2B).

On décrit maintenant le bilan énergétique d'un module photovoltaïque 2 à intégrer selon l'invention sur un gyropode déjà commercialisé sous la dénomination commerciale Segway™ i2 à partir des données du constructeur comme suit.

### Vitesse de déplacement :

### Mode Trottoir (dit Tortue):

Vitesse maximale: 9.6 km/h - Virages très lents

### Mode espaces ouverts:

Vitesse maximale: 20 km/h - Virages très rapides

### L'autonomie et le temps de rechargement existants :

Le Segway™ i2 est équipé de deux moteurs électriques sans balais (1,5kw chacun). Son autonomie est de 25 à 38 kms pour une charge complète avec des batteries Lithium-Ion (capacité de 400Wh) de 13 à 19 km pour une charge complète avec des batteries NiMH (capacité de 220Wh). Donc, une consommation de 10,5Wh à 16Wh par km parcouru est estimée.

Temps de rechargement:
- 5h environ pour batterie une NiMH
- 8h environ pour la batterie Li-Ion

### Dimensions :

Hauteur de plate-forme 10: 21 cm
Encombrement au sol: 64 x 64 cm

### Capacité de transport :

Le Segway™ i2 est prévu pour pouvoir transporter un conducteur de 118 kg maximum. Pour des raisons de sécurité, le conducteur doit peser au minimum 50 kg. En effet, si le conducteur est trop léger, le rapport Masse Conducteur/Masse gyropode est trop faible pour contrôler la machine en toute sécurité.

### Calcul de la surface du module photovoltaïque 2 selon l'invention nécessaire :

A partir d'hypothèses d'ensoleillement qui correspondent à un cas moyen dans le monde entier, telles que l'on peut rencontrer par exemple dans une ville comme Lyon en France.

La ressource solaire moyenne par année est estimée aux environs de 3,92kWh/m²/jour. Avec pour hypothèses que le rendement d'un module photovoltaïque 2 soit de l'ordre de 12%, on obtient une énergie solaire disponible de 470 Whm²/jour susceptible d'être produite à la sortie du module photovoltaïque 2.

Ainsi, pour obtenir une charge électrique efficace du Segway™ i2 par le module photovoltaïque au cours d'une journée moyennement ensoleillée, on a besoin d'une surface S_{moy} du module photovoltaïque :
S_{moy} = capacité de la batterie / énergie solaire disponible par jour,
   soit pour une batterie NiMH :
   S_{moy} = 220/470 ≃ 0.5m².

Et pour une batterie Li-Ion:
S_{moy} = 400/470 ≃ 0.85 m².

Ainsi, les inventeurs parviennent à la conclusion qu'un module photovoltaïque 2 d'un rendement de 12% qui doit être intégré selon l'invention dans un Segway™ i2 doit respecter les deux contraintes suivantes :
1. une surface nécessaire S_{moy} d'au moins 0.5m² pour une batterie NiMH et 0.85m² pour une batterie Li-Ion,
2. un poids ne dépassant pas les 38 kgs (en considérant que le poids moyen d'un usager est de l'ordre de 80kg).

Avec les dimensions connues du manche de conduite et de maintien 10 d'un Segway™ i2 et une inclinaison maximale θ de l'ordre de 60°, la surface totale S_{T} du module 2 que l'on peut implanter sur le Segway™ i2 est égale à :
S_{T} = Largeur L * Hauteur H, soit S_{T} = 1,50*O, 64=0,95m².
Les dimensions L et H sont représentées sur la vue de face du gyropode en figure 3.

Ainsi, les inventeurs parviennent à la conclusion que la surface totale S_{T} qui peut être physiquement implantée sur le Segway™ i2 est suffisante pour répondre au cahier de charge du dimensionnement, car la surface totale S_{T} est supérieure au maximum de S_{moy} ≃ 0.85m².

Au niveau de poids, un module photovoltaïque 2 d'une surface totale S_{T} de l'ordre de l, 5m² a un poids de l'ordre 20 kg.

Ainsi, en considérant le module photovoltaïque 2 commercialisé, le poids d'un module photovoltaïque 2 à intégrer qui présente une surface de 0.95m² est de l'ordre de 12kg pour le module et 0.5kg pour le régulateur de charge et câblage ajoutés.

Ainsi, le poids total du module photovoltaïque et l'électronique à embarquer sur le gyropode est de 12.5Kg. Les inventeurs parviennent à la conclusion qu'un tel poids remplit bien le cahier de charge, puisque inférieur à 38Kg.

Bien évidemment, il est toujours possible d'envisager dans le cadre de l'invention d'intégrer des modules photovoltaïques de poids moindre.

## Revendications

1. Véhicule formant gyropode (1) comprenant un manche (12) de maintien et de conduite par un utilisateur, au moins un moteur électrique pour mettre en rotation les roues du gyropode, une batterie permettant d'alimenter le(s) moteur(s) électrique **caractérisé en ce qu'**il comprend un module photovoltaïque (2) pour charger électriquement la batterie ou pour alimenter partiellement électriquement le moteur électrique à partir de l'énergie solaire, le module photovoltaïque comprenant deux parties (20, 21) dont une est fixe et s'étend le long du manche de maintien et de conduite et l'autre escamotable entre une position extrême escamotée dans laquelle elle permet le déplacement du gyropode et une position extrême déployée dans laquelle elle sert de béquille de maintien du gyropode à l'arrêt selon au moins une inclinaison déterminée permettant d'augmenter le rendement de l'ensemble du module photovoltaïque par rapport à la position du soleil.

2. Véhicule formant gyropode selon la revendication 1, dans lequel la partie escamotable l'est par coulissement depuis la position extrême escamotée dans laquelle elle s'étend sensiblement parallèlement à la partie fixe du module photovoltaïque.

3. Véhicule formant gyropode selon la revendication 2, dans lequel la partie coulissante du module photovoltaïque est en outre pivotante dans sa position extrême déployée afin de modifier l'inclinaison du gyropode.

4. Véhicule formant gyropode selon la revendication 1, dans lequel la partie escamotable l'est par pivotement depuis la position extrême escamotée dans laquelle elle s'étend sensiblement parallèlement et en dessous de la plateforme du gyropode.

5. Véhicule formant gyropode selon l'une des revendications précédentes, comprenant des moyens de motorisation électrique pour escamoter la partie escamotable du module photovoltaïque depuis sa position extrême escamotée jusqu'à sa position extrême déployée.

6. Véhicule formant gyropode selon la revendication 5, dans lequel les moyens de motorisation électrique consistent en un servomoteur.

7. Véhicule formant gyropode selon l'une quelconque des revendications précédentes, dans lequel la surface totale du module photovoltaïque est comprise entre 0.5 et 1.5 m².

## Patentansprüche

1. Selbst balancierendes Fahrzeug (1), umfassend eine Halte- und Lenkstange (12) für einen Benutzer, wenigstens einen Elektromotor, um die Räder des selbst balancierenden Fahrzeugs in Rotation zu versetzen, eine Batterie, die es ermöglicht den oder die Elektromotor(en) zu versorgen,
**dadurch gekennzeichnet, dass** es ein Photovoltaik-Modul (2) umfasst, um, ausgehend von Solarenergie, die Batterie elektrisch aufzuladen oder den Elektromotor partiell elektrisch zu versorgen, wobei das Photovoltaik-Modul zwei Teile (20, 21) umfasst, von denen eines fest ist und sich entlang der Halte- und Lenkstange erstreckt, und das andere ein- und ausfahrbar bzw. ein- und ausklappbar ist, zwischen einer eingefahrenen bzw. eingeklappten Endstellung, in der es die Bewegung des selbst balancierenden Fahrzeugs ermöglicht, und einer ausgefahrenen bzw. ausgeklappten Endstellung, in der es als Ständer zum Halten des selbst balancierenden Fahrzeugs im Halte-Zustand dient, in wenigstens einer bestimmten Neigung, welche es ermöglicht, den Ertrag der Gesamtheit von dem Photovoltaik-Modul in Bezug auf die Sonnen-Position zu erhöhen.

2. Selbst balancierendes Fahrzeug nach Anspruch 1, wobei das ein- und ausfahrbare bzw. ein- und ausklappbare Teil aus der eingefahrenen bzw. eingeklappten Endstellung, in welcher es sich im Wesentlichen parallel zu dem festen Teil des Photovoltaik-Moduls erstreckt, durch Verschieben ausfahrbar ist.

3. Selbst balancierendes Fahrzeug nach Anspruch 2, wobei das verschiebbare Teil des Photovoltaik-Moduls weiterhin in seiner ausgefahrenen bzw. ausgeklappten Endstellung schwenkbar ist, um die Neigung des selbst balancierenden Fahrzeugs zu modifizieren.

4. Selbst balancierendes Fahrzeug nach Anspruch 1, wobei das ein- und ausfahrbare bzw. bzw. ein- und ausklappbare Teil aus seiner eingefahrenen bzw. eingeklappten Endstellung, in der es sich im Wesentlichen parallel zu und unterhalb von der Plattform des selbst balancierenden Fahrzeugs erstreckt, durch Schwenken ausklappbar ist.

5. Selbst balancierendes Fahrzeug nach einem der vorhergehenden Ansprüche, umfassend Mittel zur elektrischen Motorisierung, um das ein- und ausfahrbare bzw. ein- und ausklappbare Teil des Photovoltaik-Moduls aus seiner eingefahrenen bzw. eingeklappten Endstellung zu seiner ausgefahrenen bzw. ausgeklappten Endstellung zu bewegen.

6. Selbst balancierendes Fahrzeug nach Anspruch 5, wobei die Mittel zur elektrischen Motorisierung in einem Servomotor bestehen.

7. Selbst balancierendes Fahrzeug nach einem der vorhergehenden Ansprüche, wobei die Gesamtfläche des Photovoltaik-Moduls zwischen 0,5 und 1,5 m² liegt.

## Claims

1. A vehicle forming a gyropode (1) including a handle (12) for standing still, and for driving by a user, at least one electric motor to rotate the wheels of the gyropode, a battery enabling the electric motor(s) to be powered, **characterised in that** it includes a photovoltaic module (2) to charge the battery electrically, or to partially power the electric motor from solar energy, where the photovoltaic module includes two portions (20, 21), one of which is fixed and extends along the standing and driving handle, and the other of which can be retracted between an extreme retracted position in which it enables the gyropode to be moved, and an extreme deployed position, in which it acts as a stand for holding the gyropode when stopped, with at least one determined inclination, enabling the efficiency of the entire photovoltaic module to be increased relative to the position of the sun.

2. A vehicle forming a gyropode according to claim 1, in which the retractable portion is retractable by sliding from the extreme retracted position in which it extends parallel to the fixed portion of the photovoltaic module.

3. A vehicle forming a gyropode according to claim 2, in which the sliding portion of the photovoltaic module is also pivoting in its extreme deployed position, in order to modify the inclination of the gyropode.

4. A vehicle forming a gyropode according to claim 1, in which the retractable portion is retractable by pivoting from the extreme retracted position in which it extends parallel and under the platform of the gyropode.

5. A vehicle forming a gyropode according to one of the previous claims, including electric motor means to retract the retractable portion of the photovoltaic module from its extreme retracted position as far as its extreme deployed position.

6. A vehicle forming a gyropode according to claim 5, in which the electric motor means consist of a servomotor.

7. A vehicle forming a gyropode according to any of the previous claims, in which the total area of the photovoltaic module is between 0.5 and 1.5 m².
